# EUROPEAN PATENT SPECIFICATION

(11) **EP 0 724 826 B1**
(45) Date of publication and mention of the grant of the patent: **26.04.2000**
(21) Application number: 96200120.2
(22) Date of filing: 18.01.1996
(51) Int. Cl.: A01G 9/02

(54) **A flowerpot**
Blumentopf
Pot de fleur

(30) Priority: 01.02.1995 NL 9500175
(43) Date of publication of application: 07.08.1996
(73) Proprietor: SYNPRODO PLANTPAK B.V., 6603 BM Wijchen (NL)
(72) Inventor: Mortko, Stanislaw A.J., NL-5140 AD Waalwijk (NL)
(74) Representative: Veldman-Dijkers, Cornelia G.C., Ir.

(56) References cited:
- EP-A- 0 599 798
- WO-A-94/23560
- DE-A- 4 000 950
- DE-U- 9 308 219
- DE-U- 9 308 335
- FR-A- 867 161
- GB-A- 674 471
- US-A- 4 173 097

## Description

The invention relates to a flowerpot comprising a tubular section extending around a central axis and a bottom part extending transversely to said central axis and being connected to one end of said tubular section, said bottom part being provided with slots extending substantially radially to the outer side of the pot, said slots being present on a side of the bottom part facing away from said section, whereby a slot is bounded by side walls extending substantially axially and radially, which are interconnected at a side facing said section by means of an upper wall, and whereby each side wall is connected to a side wall of a neighbouring slot by means of a bottom wall comprising a hole.

In a similar flowerpot disclosed in International Patent Application WO94/23560 ribs are positioned on a side facing away from said section, between the hole in the bottom wall and the outer side of the pot or a slot. Said ribs keep the bottom wall spaced from a foundation on which the pot is supported and form a passage from said hole to said outer side of the pot or to said slot. Via said passage water or air can flow into or out of the pot.

A drawback of such ribs is that they constitute local thickenings of the material. The ribs are for example formed as local thickenings during the injection moulding process. With thickenings of this kind problems may occur with regard to the curing of the plastic material. Local thickenings cannot occur when a different manufacturing technique, such as a thermo-moulding technique, is used and consequently a flowerpot according to the aforesaid patent application cannot be produced by means of a thermo-moulding technique. This technique is being used to an increasing extent, as it is possible with this technique to manufacture flowerpots having thinner walls in a simple manner, as a result of which less plastic material is required for producing a flowerpot.

A further drawback of such ribs is that the flowerpot exhibits relatively little stability, since the flowerpot may tilt over the ribs and subsequently fall over.

The object of the present invention is to provide a flowerpot which is provided with a passage from a hole in the bottom wall to the outer side of the pot or to a slot, whereby the presence of a local thickening in the flowerpot is avoided and a relatively stable flowerpot is obtained.

With the flowerpot according to claim 1 this objective is accomplished.

In principle a flowerpot of this type may exhibit a uniform wall thickness, and it is suitable for being produced by means of a thermo-moulding technique. The connecting wall keeps the sloping wall spaced apart from a plane in which the remaining part of the bottom wall extends. When the flowerpot rests on a foundation with its bottom part, any water present inside the flowerpot will flow to the bottom wall that forms the lowermost level of the flowerpot. Then the water will be drained through the hole in the bottom wall, via the channel located between said bottom wall, said connecting walls and said sloping wall. When water or air is being supplied via the bottom part of the flowerpot said water or said air will follow the reverse route. The substantially axial connecting walls prevent the channel from collapsing under the influence of the weight of the plants and the earth present in the flowerpot. A flowerpot filled with earth and plants is supported on the entire foundation and as a result exhibits a relatively great stability.

One embodiment of the flowerpot according to the invention is characterized in that, seen in axial direction, the connecting wall is larger on a side located near the outer side of the flowerpot than on a side located near said hole.

As a result of this any water present on the sloping wall will flow towards the hole and be discharged through said hole.

Yet another embodiment of a flowerpot according to the invention is characterized in that said flowerpot comprises five slots.

Experiments have shown that a bottom part comprising five slots is optimal. When an even number of slots is used the distribution of forces over the bottom part appears to be unfavourable. With the most common dimension of the flowerpot, with a diameter of 9 - 13 cm, a bottom part comprising three slots is not stable enough, whilst the diameter of the holes will become too small when seven slots are provided.

Another embodiment of the flowerpot according to the invention is characterized in that the pot is made by means of a thermo-moulding technique.

Such a technique is environmentally friendly, as in comparison with an injection moulding technique relatively little plastic material is required for making such a flowerpot.

Yet another embodiment of the flowerpot according to the invention is characterized in that a central part of the bottom part located near the central axis can be moved against spring force in a direction away from the tubular section.

An empty flowerpot is only supported on the outer edges of the bottom wall.

In use the weight of the plants and the earth will cause the central part of the bottom part to sag against said spring force until the bottom walls abut against the foundation. When the flowerpot is picked up the bottom wall may sag a little further, but as a result of the spring action of the bottom part the bottom wall will immediately return to the position in which the bottom walls abut against the foundation. Thus it is prevented that the flowerpot is supported only on a part of the bottom walls which is located near the central axis, in which position "spinning" of the flowerpot may occur.

The invention will be explained in more detail hereafter with reference to the drawing, in which:
Figure 1 is a perspective view of a first embodiment of a flower pot according to the invention;
Figure 2 is a perspective view of a second embodiment of a flower pot according to the invention;
Figure 3 is a sectional view, taken along line III-III, of the flowerpot shown in Figure 2, with an unloaded bottom part;
Figure 4 is a sectional view corresponding with Figure 3, with a loaded bottom part;
Figure 5 is a perspective view of a detail of the flowerpot shown in Figure 2; and
Figure 6 is a perspective view of a third embodiment of a flowerpot according to the invention.

In the Figures like parts are numbered alike.

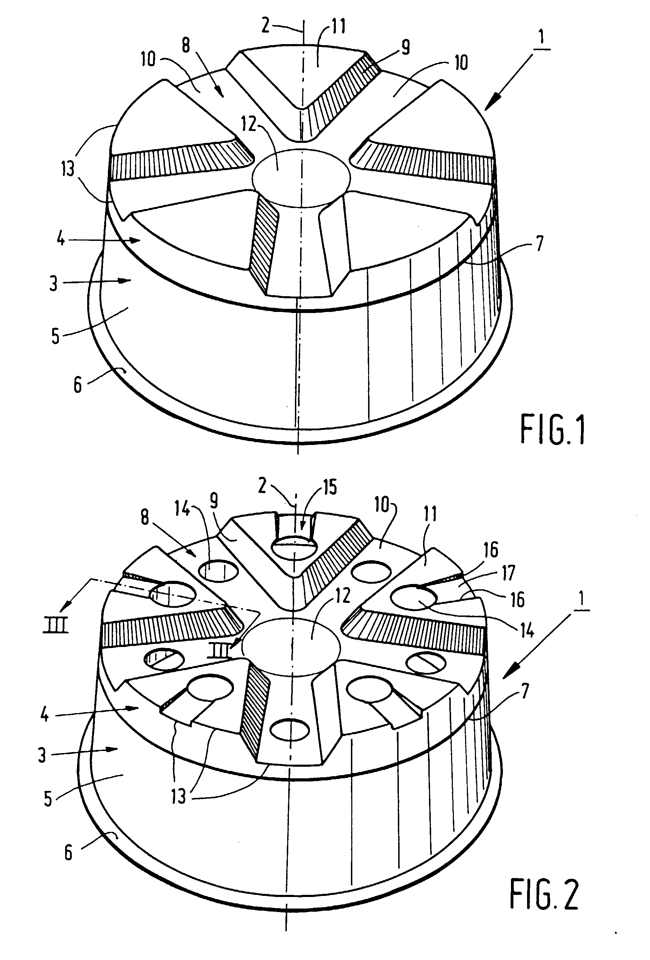

Figure 1 shows a flowerpot 1 according to the invention, which is provided with a tubular section 3 extending about central axis 2, and with a bottom part 4 connected thereto. The tubular section 3 comprises a cylindrical part 5 and a flange 6 secured to one end thereof, said flange extending transversely to the central axis and constituting a stiffening for the cylindrical part 5. Bottom part 4 is connected, via a receding edge 7, to an end of the cylindrical part 5 facing away from flange 6. On a side facing away from the tubular section said bottom part 4 is provided with five radially extending slots 8. Each slot 8 is bounded by substantially radially and axially extending side walls 9, which are interconnected, on a side directed towards section 3, by an upper wall 10. Each side wall is connected to a side wall of a neighbouring slot 8 by means of a bottom wall 11. The side walls 9 are slightly inclined, resulting in a trapezoidal cross-section of a slot 8. The slots 8 all extend from the central axis 2, as a result of which a common open part 12 is formed near the central axis. A central part comprising said open part 12 and adjacent parts of the bottom and upper walls is recessed with respect to the outer side 13 of the flowerpot. As a result of this the central part is biased in that direction, as it were. When the flower pot 1 is filled with earth and plants the central part 12 will sag until all bottom walls 11 are supported on a foundation. As a result of said bias the bottom part 4 of the flowerpot 1 will not sag to the extent that the flower pot 1 would only be supported on the parts of the bottom walls 11 located near the central part, however, in which position undesirable spinning of the flowerpot 1 may occur. If desired holes may be provided in the upper and bottom walls 10, 11 for the supply and discharge of water and air. The holes are not shown in Figure 1. The five slots 8 in the bottom part 4 provide the flowerpot with an optimum stability and leave sufficient space for forming holes having a desired minimum width of 9 mm, for example. The illustrated flowerpot 1 may be formed of plastic material by means of a thermo-moulding technique or an injection moulding technique.

Figure 2 shows a second embodiment of a flowerpot 1 according to the invention, which largely corresponds with the flowerpot 1 shown in Figure 1. Accordingly only the differences will be discussed herein. The bottom part 1 is provided with ten regularly spaced-apart holes 14 arranged so as to form a circle, whereby each bottom wall and each upper wall is provided with one hole 14. At the side facing away from section 3 each bottom wall 11 is provided with a channel 15, which extends from said hole 14 to the outer side of the flowerpot 1. Channel 15 is bounded by radially and axially extending connecting walls 16 and a sloping wall 17 positioned between said connecting walls. Near the outer side 13 the connecting walls 16 are larger, seen in axial direction, than near hole 14, as a result of which the sloping wall 17 slopes down to hole 14.

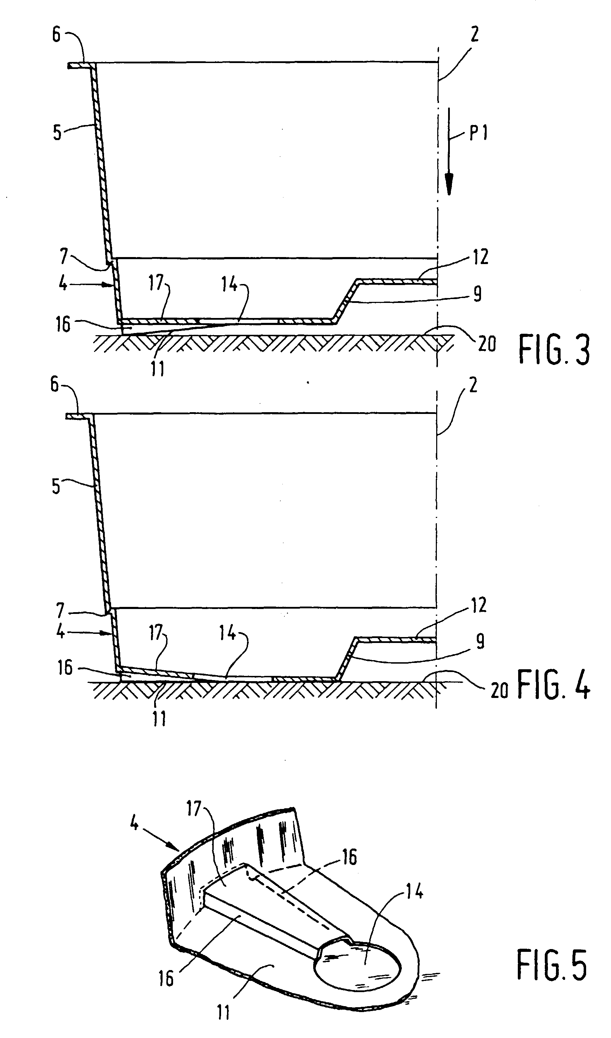

Figures 3 and 4 are sectional views, taken along line III - III, of the flowerpot 1 shown in Figure 2, showing a flowerpot 1 in unloaded and loaded condition respectively, that is, without and with earth and plants present therein. As can be seen in Figure 3, in unloaded condition the central part is located further away from the foundation 20 than the outer side 13 of the flowerpot 1. As a result of this the flowerpot 1 is biased, as it were. The flowerpot 1 rests firmly on the foundation 20 with the outer edges of the bottom walls 11. In the loaded condition the central part 12 has sagged in the direction of arrow P1 against the spring force of the plastic material, and the bottom walls 11 abut against the foundation 20 near the central part. Sloping wall 17 slopes down from the outer side 13 towards hole 14. Due to the presence of connecting walls 16 the edge of hole 14 near sloping wall 17 will at all times be spaced apart from the foundation 20, as a result of which water or air can at all times exit or enter the flowerpot via channel 15 and there is no possibility of a relatively thin capillary water film being formed between the bottom wall and the foundation. Such a water film would close the holes present in the bottom walls, as a result of which air would not be able to enter the flowerpot. The part of the edge of the hole that is not located near sloping wall 17 abuts against the foundation 20 (see Figure 5).

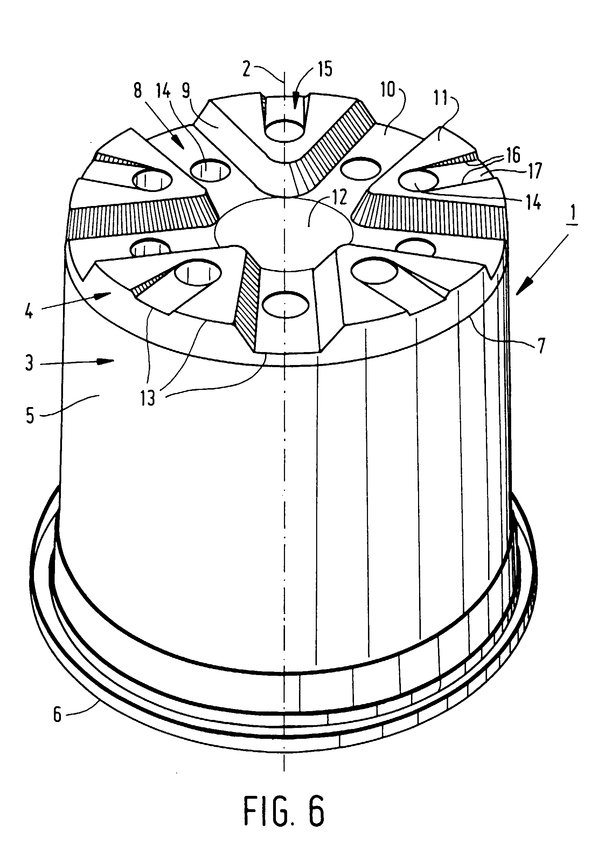

Figure 6 shows a third embodiment of a flowerpot according to the invention. The flowerpot 1 is provided with connecting walls 16 extending tangentially to the hole, said connecting walls beginning at the level of the centre of the hole and tapering outwardly towards the outside. As a result of this configuration there is no stepped transition from the edge of the hole to the sloping wall 17.

Instead of being connected to the outer side 13 the channel 17 may also be connected to a neighbouring slot 8.

The flowerpot may be made of polypropylene by using a thermo-moulding technique.

Besides being cylindrical the tubular section 3 may also be square, hexagonal or octagonal.

The flowerpot comprising five slots 8 has an optimum hole pattern for a uniform drainage of the bottom part 4. Furthermore it exhibits a relatively great resilience and stability. When the flowerpot is manufactured by means of a thermo-moulding technique a bottom part comprising five slots has greater resilience than a bottom part comprising for example three slots. With a flowerpot comprising five slots all aspects with regard to stability, resilience and drainage are combined in an optimal manner.

Of course it is nevertheless possible to use a different number of slots.

## Claims

1. A flowerpot (1) comprising a tubular section (3) extending around a central axis (2) and a bottom part (4) extending transversely to said central axis (2) and being connected to one end of said tubular section (3), said bottom part (4) being provided with slots (8) extending substantially radially to the outer side of the pot (1), said slots (8) being present on a side of the bottom part (4) facing away from said section (3), whereby a slot (8) is bounded by side walls (9) extending substantially axially and radially with respect to the central axis, which walls (9) are interconnected at a side facing said section (3) by means of a wall (10), and whereby each side wall (9) at a side facing away from said section (3) is connected to a side wall (9) of a neighbouring slot (8) by means of a bottom wall (11) comprising a hole (14), characterized in that the bottom wall (11) is provided with a channel (15) extending from the hole (14) to the outer side of the pot (1) or to a neighbouring slot (8), said channel (15) being located on a side of the bottom part (4) facing away from the section (3) and being bounded by connecting walls (16) extending from an edge of the hole (14) in an at least substantially axially direction with respect to the axis of the hole (14) and by a sloping wall (17) connected to said connecting walls (16).

2. A flowerpot according to claim 1, characterized in that, seen in axial direction, the connecting wall (16) is larger on a side located near the outer side of the flowerpot (1) than on a side located near said hole (14).

3. A flowerpot according to any one of the preceding claims, characterized in that said flowerpot (1) comprises five slots (8).

4. A flowerpot according to any one of the preceding claims, characterized in that the pot (1) is made by means of a thermo-moulding technique.

5. A flowerpot according to any one of the preceding claims, characterized in that a central part of the bottom part (4) located near the central axis (2) is movable against spring force in a direction away from said tubular section (3).

6. A flowerpot according to any one of the preceding claims, characterized in that said slots (8) extend from said central axis (2) to the outer side of the flowerpot (1).

7. A flowerpot according to any one of the preceding claims, characterized in that said wall (10) is provided with a hole (12).

## Patentansprüche

1. Blumentopf (1), der einen röhrenförmigen Bereich (3) umfaßt, der sich um eine Mittelachse (2) herum erstreckt, und einen unteren Bereich (4), der sich quer zur Mittelachse (2) erstreckt und mit einem Ende des röhrenförmigen Bereichs (3) verbunden ist, wobei der untere Bereich (4) mit Schlitzen (8) versehen ist, die sich im wesentlichen radial zu der Außenseite des Topfes (1) erstrecken, wobei die Schlitze (8) sich auf einer Seite des unteren Bereichs (4) befinden, die von dem Bereich (3) weggerichtet ist, wobei ein Schlitz (8) von Seitenwänden (9) begrenzt wird, die sich hinsichtlich der Mittelachse im wesentlichen axial und radial erstrecken, wobei die Wände (9) mittels einer oberen Wand (10) an einer Seite miteinander verbunden sind, die dem Bereich (3) gegenüberliegt, und wobei jede Seitenwand (9) mittels einer unteren Wand (11), die ein Loch (14) umfaßt, mit einer Seitenwand (9) eines benachbarten Schlitzes (8) verbunden ist, dadurch gekennzeichnet, daß die untere Wand (11) mit einem Kanal (15) ausgestattet ist, der sich von dem Loch (14) zur Außenseite des Topfes (1) oder zu einem benachbarten Schlitz (8) erstreckt, wobei sich der Kanal (15) auf einer Seite des unteren Bereichs (4) befindet, der vom Bereich (3) weggerichtet ist, und von Verbindungswänden (16) begrenzt wird, die sich von einem Rand des Loches (14) in einer im wesentlichen axialen Richtung hinsichtlich der Achse des Loches (14) erstrecken, und durch eine schräge Wand (17), die mit den Verbindungswänden (16) verbunden ist.

2. Blumentopf nach Anspruch 1, dadurch gekennzeichnet, daß die Verbindungswand (16), in axialer Richtung gesehen, auf einer Seite, die sich in der Nähe der Außenseite des Blumentopfes (1) befindet, größer ist als auf einer Seite, die sich in der Nähe des Loches (14) befindet.

3. Blumentopf nach einem der vorhergehenden Ansprüche, dadurch gekennzeichnet, daß der Blumentopf (1) fünf Schlitze (8) umfaßt.

4. Blumentopf nach einem der vorhergehenden Ansprüche, dadurch gekennzeichnet, daß der Topf (1) mittels einer Thermo-Spritztechnik hergestellt ist.

5. Blumentopf nach einem der vorhergehenden Ansprüche, dadurch gekennzeichnet, daß ein Mittelteil des unteren Bereichs (4), der sich in der Nähe der Mittelachse (2) befindet, gegen die Spannkraft in einer Richtung beweglich ist, die von dem röhrenförmigen Bereich (3) weggerichtet ist.

6. Blumentopf nach einem der vorhergehenden Ansprüche, dadurch gekennzeichnet, daß sich die Schlitze (8) von der Mittelachse (2) zur Außenseite des Blumentopfes (1) erstrecken.

7. Blumentopf nach einem der vorhergehenden Ansprüche, dadurch gekennzeichnet, daß die Wand (10) mit einem Loch (12) versehen ist.

## Revendications

1. Pot à fleurs (1) comprenant une section tubulaire (3) s'étendant autour d'un axe central (2) et une partie inférieure (4) s'étendant transversalement par rapport audit axe central (2) et reliée à une première extrémité de ladite section tubulaire (3), ladite partie inférieure (4) comportant des fentes (8) s'étendant sensiblement radialement vers la face externe du pot (1), lesdites fentes (8) étant disposées sur une face de la partie inférieure (4) transversale distante de ladite section (3), de telle sorte qu'une fente (8) est délimitée par des parois latérales (9) s'étendant sensiblement axialement et radialement par rapport à l'axe central, lesquelles parois (9) sont reliées ensemble sur une face transversale à ladite section (3) au moyen d'une paroi (10), et de telle sorte que chaque paroi latérale (9) sur une face transversale distante de ladite section (3) est reliée à une paroi latérale (9) d'une fente voisine (8) au moyen d'une paroi inférieure (11) comprenant un orifice (14), caractérisé en ce que la paroi inférieure (11) comporte un canal (15) s'étendant à partir de l'orifice (14) vers la face externe du pot (1) ou vers une fente voisine (8), ledit canal (15) étant situé sur une face de la partie inférieure (4) transversale distante de la section (3) et étant délimité par des parois de liaison (16) s'étendant à partir d'un bord de l'orifice (14) suivant au moins une direction sensiblement axiale par rapport à l'axe de l'orifice (14) et par une paroi inclinée (17) reliée auxdites parois de liaison (16).

2. Pot à fleurs selon la revendication 1, caractérisé en ce que, vue dans une direction axiale, la paroi de liaison (16) est plus large sur une face située à proximité de la face externe du pot à fleurs (1) que sur une face située à proximité dudit orifice (14).

3. Pot à fleurs selon l'une quelconque des revendications précédentes, caractérisé en ce que ledit pot à fleurs (1) comprend cinq fentes (8).

4. Pot à fleurs selon l'une quelconque des revendications précédentes, caractérisé en ce que le pot (1) est réalisé suivant un procédé de thermoformage.

5. Pot à fleurs selon l'une quelconque des revendications précédentes, caractérisé en ce qu'une partie centrale de la partie inférieure (4) située à proximité de l'axe central (2) peut se déplacer par déformation élastique dans un sens opposé à ladite section tubulaire (3).

6. Pot à fleurs selon l'une quelconque des revendications précédentes, caractérisé en ce que lesdites fentes (8) s'étendent à partir dudit axe central (2) vers la face externe du pot à fleurs (1).

7. Pot à fleurs selon l'une quelconque des revendications précédentes, caractérisé en ce que ladite paroi (10) comporte un orifice (12).
